# EUROPEAN PATENT APPLICATION

(11) **EP 4 418 388 A1**
(43) Date of publication of application: **21.08.2024**
(21) Application number: 24155777.6
(22) Date of filing: 05.02.2024
(51) Int. Cl.: H01M 10/04, H01M 50/109, H01M 50/153

(54) **BUTTON CELL**

(30) Priority: 20.02.2023 KR 20230022246
(71) Applicant: Samsung SDI Co., Ltd., Yongin-si, Gyeonggi-do 17084 (KR)
(72) Inventor: Kim, Dae-Sup, 17084 Yongin-si, Gyeonggi-do (KR)
(74) Representative: Gulde & Partner

(57) **Abstract**

A button cell (1000, 1002) includes an electrode assembly (100) including a first electrode (110), a second electrode (120), a separator (130) between the first electrode (110) and the second electrode (120), a first electrode tab (140) extending from the first electrode (110), and a second electrode tab (150) extending from the second electrode (120), a case (200) accommodating the electrode assembly (100), and including a through hole (210) exposing an upper central region of the electrode assembly (100) and an opening (220) exposing a lower portion (102) of the electrode assembly (100), a bottom plate (300) coupled to the case (200) to cover the opening (220), and connected to the first electrode tab (140), a terminal plate (400) insulated from and bonded to the case (200) to cover the through hole (210), and connected to the second electrode tab (150), and a bonding layer (500) between the case (200) and the terminal plate (400), and configured to insulate and bond the case (200) and the terminal plate (400).

## Description

### BACKGROUND

### 1. Field

The present disclosure relates to a button cell.

### 2. Description of Related Art

In general, a rechargeable battery is a battery that can be charged and discharged.

Recently, as a demand for wearable devices such as headphones, earphones, smartwatches, and body-attached medical devices using wireless communication such as Bluetooth increases, a need for a button cell, which is a micro-sized rechargeable battery mounted in a wearable device, is increasing.

Such a conventional button cell accommodates an electrode assembly, and includes a case connected to a first electrode of the electrode assembly, a cap plate welded to the case, and a terminal plate insulated and bonded to the cap plate by a bonding layer and connected to a second electrode of the electrode assembly.

However, the conventional button cell (button battery) has a problem in that, since a case and a cap plate are coupled by a welded portion, the bonding layer may melt due to welding heat, thereby causing a short circuit between the terminal plate and the case welded to the cap plate.

In addition, according to the conventional button cell, a welded portion between the case and the cap plate is located at an upper portion of the button cell, and thus a bonding layer preventing a short circuit between the cap plate and the terminal plate is difficult to overlap the welded portion.

### SUMMARY

The present disclosure attempts to provide a button cell capable of preventing a short circuit between case and terminal plate by avoiding or preventing interference of a welded portion with respect to a terminal plate and a bonding layer.

A button cell includes an electrode assembly including a first electrode, a second electrode, a separator between the first electrode and the second electrode, a first electrode tab extending from the first electrode, and a second electrode tab extending from the second electrode, a case accommodating the electrode assembly, and including a through hole exposing an upper central region the electrode assembly and an opening exposing a lower portion of the electrode assembly, a bottom plate coupled to the case to cover the opening, and connected to the first electrode tab, a terminal plate insulated from and bonded to the case to cover the through hole, and connected to the second electrode tab, and a bonding layer between the case and the terminal plate, and configured to insulate and bond the case and the terminal plate.

A button cell may further include a welded portion welding the case to the bottom plate.

The case may further include a sidewall, and the welded portion may be located between the sidewall and the bottom plate.

The sidewall may include a first stepped portion recessed to correspond to the bottom plate, and the bottom plate may be received in the first stepped portion.

The welded portion may be in the first stepped portion.

The bottom plate may include a second stepped portion recessed to correspond to the sidewall, and the bottom plate may be received in the second stepped portion.

The welded portion may be in the second stepped portion.

The bonding layer may protrude from the terminal plate in a direction toward the sidewall.

The bonding layer may overlap the sidewall.

The terminal plate may include a flange portion covering the through hole and in contact with the bonding layer.

The terminal plate may include a protrusion extending from the flange portion, passing through the through hole, and connected to the second electrode tab.

The bonding layer may be in contact with the flange portion, and the bonding layer may not contact the protrusion.

Each of a rear surface of the protrusion in contact with the second electrode tab and a front surface of the flange portion not in contact with the bonding layer may be flat.

An area of the rear surface of the protrusion may be smaller than an area of the front surface of the flange portion.

A length of the second electrode tab may be shorter than a length of the first electrode tab.

The case and the bottom plate may have same polarity as the first electrode, and the terminal plate may have same polarity as the second electrode.

A ratio of a height to a diameter of the button cell may be 1 or less, preferably 0.9 or less, and more preferably 0.8 and less.

According to an embodiment, there is provided a button cell in which interference of a welded portion between a terminal plate and a bonding layer is avoided or prevented to prevent a short circuit between a case and a terminal plate.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

FIG. 1 is a perspective view showing a button cell according to an embodiment.
FIG. 2 is a cross-sectional view taken along a line II-II of FIG. 1.
FIG. 3 is an enlarged view of a region A of FIG. 2.
FIG. 4 is a cross-sectional view showing a button cell according to another embodiment.
FIG. 5 is an enlarged view of a region B of FIG. 4.

### DETAILED DESCRIPTION

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure.

In addition, unless explicitly described to the contrary, the word "comprise" and variations such as "comprises" or "comprising" will be understood to imply the inclusion of stated elements but not the exclusion of any other elements.

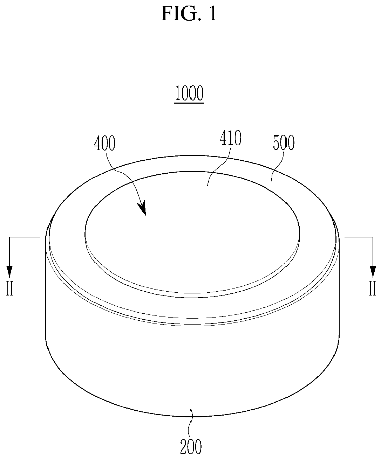

Hereinafter, a button cell according to an embodiment will be described with reference to FIG. 1 to FIG. 3.

A button cell according to an embodiment, which is a micro secondary battery, may include a coin cell, but the present disclosure is not limited thereto, and may include a cylindrical or pin-type battery.

Herein, the button cell, which is a battery in the form of a thin coin or button, may indicate a battery having a height-to-diameter ratio (height/diameter) of 1 or less, but the present disclosure is not limited thereto. The button cell is mainly cylindrical, so a horizontal cross-section thereof is circular, but the present disclosure is not limited thereto, and the horizontal cross-section may have an oval or polygonal shape. In this case, the diameter may mean the maximum distance in the horizontal direction of the battery, and the height may mean the maximum distance (distance from the flat bottom surface to the flat top surface) in the vertical direction of the battery.

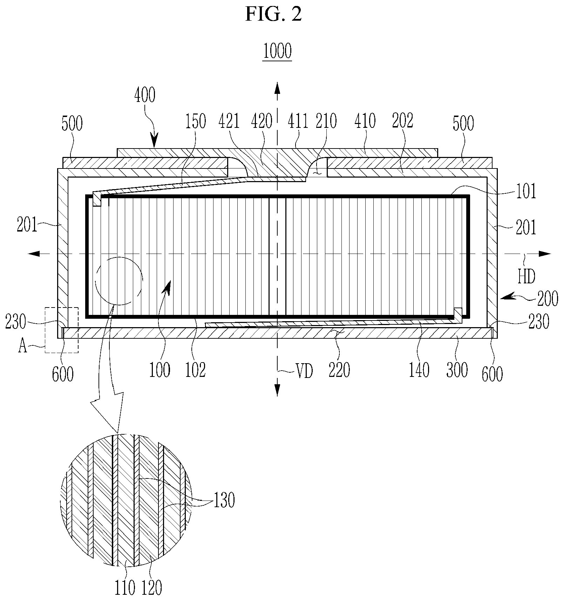

FIG. 1 is a perspective view showing a button cell according to an embodiment. FIG. 2 is a cross-sectional view taken along a line II-II of FIG. 1.

Referring to FIG. 1 and FIG. 2, a button cell 1000 according to an embodiment, which is a rechargeable battery capable of charging and discharging, includes an electrode assembly 100, a case 200, a bottom plate 300, a terminal plate 400, a bonding layer 500, and a welded portion 600.

The electrode assembly 100 is accommodated in the case 200. A lower portion 102 of the electrode assembly 100 faces the bottom plate 300 that covers an opening 220 (e.g., a lower opening) of the case 200, and an upper portion 101 of the electrode assembly 100 faces the terminal plate 400 that covers a through hole 210 (e.g., an upper through hole) of the case 200. The upper portion 101 and the lower portion 102 of the electrode assembly 100 may have planar shapes parallel to each other, but the present disclosure is not limited thereto.

The electrode assembly 100 includes a first electrode 110, a second electrode 120, a separator 130, a first electrode tab 140, a second electrode tab 150.

The first electrode 110 and the second electrode 120 are spaced apart from each other, and a separator 130 including an insulating material is located between the first electrode 110 and the second electrode 120. The first electrode 110 may be an anode, and the second electrode 120 may be a cathode, but the present disclosure is not limited thereto, and the first electrode 110 may be the cathode, and the second electrode 120 may be the anode.

The first electrode 110 has a band shape extending in a direction, and includes an anode coated region, which is an area where an anode active material layer is applied to a current collector of a metal foil (e.g., a Cu foil), and an anode uncoated region, which is a region where no active material is applied. The anode uncoated region may be located at an end of the first electrode 110 in an extension direction.

The second electrode 120 has a band shape extending in a direction while being spaced apart from the first electrode 110 with the separator 130 provided therebetween, and includes a cathode coated region, which is a region where a cathode active material layer is applied to a current collector of a metal foil (e.g., an Al foil), and a cathode uncoated region, which is a region where no active material is applied. The cathode uncoated region may be located at an end of the second electrode 120 in an extension direction.

The separator 130 extends in a direction between the first electrode 110 and the second electrode 120 to prevent a short circuit between the first electrode 110 and the second electrode 120.

The first electrode 110, the separator 130, and the second electrode 120 are sequentially stacked and wound to have a jelly roll shape with one vertical direction VD as a center thereof, but the present disclosure is not limited thereto, and they may be formed in various known shapes. Herein, the vertical direction VD includes, but is not limited to, a thickness direction of the button cell 1000.

The first electrode tab 140 extends from the first electrode 110 of the electrode assembly 100 to the bottom plate 300 that covers the opening 220 of the case 200. The first electrode tab 140 is coupled to the bottom plate 300 and connected between the first electrode 110 and the bottom plate 300. The first electrode tab 140 is in contact with the first electrode 110 and the bottom plate 300. In one or more embodiments, the first electrode tab 140 is welded to the bottom plate 300, but the present disclosure is not limited thereto, and the first electrode tab 140 may be in contact with the bottom plate 300 without being welded to the bottom plate 300. The bottom plate 300 and the case 200 to which the bottom plate 300 is welded by the first electrode tab 140 have the same polarity as the first electrode 110. In one or more embodiments, the first electrode tab 140 has a longer length than the second electrode tab 150. Since the first electrode tab 140 has a longer length than the second electrode tab 150, the bottom plate 300 may be welded to the case 200 to cover the opening 220 of the case 200 in a configuration in which the first electrode tab 140 is welded to the bottom plate 300.

The second electrode tab 150 extends from the second electrode 120 of the electrode assembly 100 to the terminal plate 400. The second electrode tab 150 is coupled to a protrusion 420 of the terminal plate 400 to connect the second electrode 120 and the terminal plate 400. The second electrode tab 150 is in contact with the second electrode 120 and the terminal plate 400. In one or more embodiments, the second electrode tab 150 is welded to a flat rear surface 421 of the protrusion 420 of the terminal plate 400, but the present disclosure is not limited thereto, and the second electrode tab 150 may be in contact with the rear surface 421 of the protrusion 420 but not welded thereto. The terminal plate 400 has a same polarity as that of the second electrode 120 because the second electrode tab 150 is connected to the terminal plate 400.

Additionally, a center pin penetrating a center of the electrode assembly 100 in the vertical direction VD may be positioned at a central portion of the electrode assembly 100, and the center pin may enable the first electrode tab 140 and the second electrode tab 150 to be supported by the protrusion 420 of the bottom plate 300 and the terminal plate 400, respectively, but the present disclosure is not limited thereto.

The case 200 is connected to the first electrode 110 of the electrode assembly 100 to accommodate the electrode assembly 100. The case 200 includes the through hole 210 exposing a central region of the upper portion 101 of the electrode assembly 100 and the opening 220 exposing the lower portion 102 of the electrode assembly 100.

The through hole 210 of the case 200 is covered by the terminal plate 400, and the protrusion 420 of the terminal plate 400 extends through the through hole 210 to face the upper portion 101 of the electrode assembly 100 accommodated in the case 200.

The opening 220 (e.g., the lower opening) of the case 200 may be formed by a sidewall 201 extending from a portion 202 (e.g., an upper portion) of the case 200 in which the through hole 210 is formed by being bent (e.g., downward) in the vertical direction VD, but the present disclosure is not limited thereto.

The bottom plate 300 covering the opening 220 of the case 200 and welded to the case 200 is welded to the first electrode tab 140 and thereby connected to the first electrode 110 of the electrode assembly 100. Thus, the case 200 has the same polarity as the first electrode 110. The case 200 has a cylindrical can shape for accommodating the upper portion 101 and side portion of the electrode assembly 100 having a form of a jelly roll, but the present disclosure is not limited thereto, and the case 200 may have various known shapes. The case 200 may accommodate various known electrolyte solutions together with the electrode assembly 100. An outer surface of the case 200 and an outer surface of the bottom plate 300 may be a first electrode terminal of the button cell 1000, but the present disclosure is not limited thereto. In this embodiment, a flat front surface of a flange portion 410 of the terminal plate 400, which is an outer surface of the terminal plate 400, may be a second electrode terminal of the button cell 1000, but the present disclosure is not limited thereto. Additionally, a plating layer may be coated on the outer surface of the case 200, but the present disclosure is not limited thereto, and various well-known coating layers may be coated on the outer surface of the case 200. The case 200 may include stainless steel, but the present disclosure is not limited thereto, and the case 200 may include various known metals.

The opening 220 of the case 200 is covered by the bottom plate 300.

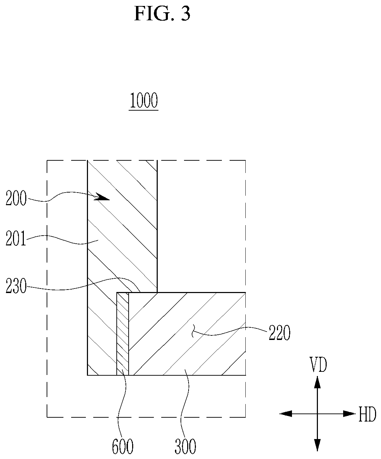

FIG. 3 is an enlarged view of a region A of FIG. 2.

Referring to FIG. 3 and FIG. 2, the bottom plate 300 is coupled to the case 200 to cover the opening 220. The bottom plate 300 is connected to the first electrode tab 140 and welded to the sidewall 201 of the case 200. The sidewall 201 of the case 200 includes a first stepped portion 230 that is recessed to correspond to the bottom plate 300. The bottom plate 300 is inserted into (or accommodated in) the first stepped portion 230.

The first stepped portion 230 is recessed along an edge (e.g, an outer peripheral or circumferential edge) of the bottom plate 300 in the vertical direction VD in a planar annular shape, but the present disclosure is not limited thereto. The bottom plate 300 is inserted into (or accommodated in) the first stepped portion 230. As the bottom plate 300 is inserted into the first stepped portion 230 of the sidewall 201 of the case 200, the sidewall 201 of the case 200 completely covers (or overlaps) the bottom plate 300 in the horizontal direction HD. The bottom plate 300 is inserted into the first stepped portion 230 of the sidewall 201 of the case 200 such that the sidewall 201 of the case 200 completely covers (or overlaps) the bottom plate 300 in the horizontal direction HD, and accordingly, the bottom plate 300 does not protrude beyond the lower end of the sidewall 201 in the vertical direction VD, which is an elongation direction of the sidewall 201 of the case 200. Accordingly, interference of the bottom plate 300 by other external components is avoided. Herein, the horizontal direction HD is a direction crossing the vertical direction VD and includes a radial direction of the button cell 1000.

In an assembled configuration in which the bottom plate 300 is inserted the first stepped portion 230 of the sidewall 201 of the case 200, the bottom plate 300 may be directly coupled to the sidewall 201 of the case 200 by the welded portion 600. The welded portion 600 may be formed by a welding process using welding means such as a laser beam radiated in the vertical direction VD. In one or more embodiments, the bottom plate 300 and the sidewall 201 of the case 200 are directly coupled by the welded portion 600 located in the first stepped portion 230, and thereby the opening 220 of the case 200 is covered by the bottom plate 300. The case 200 is coupled to the bottom plate 300 by the welded portion 600 to have same polarity as that of the first electrode 110. Accordingly, the bottom plate 300 and the case 200 have the same polarity as that of the first electrode 110. In one or more embodiments, the outer surface of the bottom plate 300 may be a first electrode terminal of the button cell 1000, but the present disclosure is not limited thereto. In one or more embodiments, the bottom plate 300 includes stainless steel, but the present disclosure is not limited thereto, and may include various known metals.

The terminal plate 400 is connected to the second electrode 120 and is insulated from and bonded to the portion 202 of the case 200 where the through hole 210 is formed by the bonding layer 500. The terminal plate 400 covers the through hole 210 of the case 200. The terminal plate 400 is located on the portion 202 of the case 200. The terminal plate 400 covers the through hole 210 of the case 200. Since the terminal plate 400 covers the through hole 210 of the case 200 that exposes the central region the upper portion 101 of the electrode assembly 100, and the bottom plate 300 covers the opening 220 that exposes the lower portion 102 of the electrode assembly 100, the through hole 210 of the case 200 and the opening 220 are completely covered by the terminal plate 400 and the bottom plate 300, respectively. The terminal plate 400 firmly seals the electrode assembly 100 together with the case 200, the bottom plate 300, and the bonding layer 500. The terminal plate 400 is coupled to the second electrode tab 150 of the electrode assembly 100 and thereby connected to the second electrode 120 of the electrode assembly 100. The terminal plate 400 has same polarity as that of the second electrode 120.

The terminal plate 400 includes a flange portion 410 and a protrusion 420.

The flange portion 410 is located on the portion 202 of the case 200 and covers the through hole 210. The flange portion 410 has a larger area than that of the protrusion 420. The flange portion 410 may have a larger diameter than that of the protrusion 420. In one or more embodiments, the flange portion 410 has a thinner thickness than that of the protrusion 420, but the present disclosure is not limited thereto. A rear surface of the flange portion 410 contacts the bonding layer 500, and the flange portion 410 is insulated from and bonded to the case 200 by the bonding layer 500. The front surface 411 of the flange portion 410 does not contact the bonding layer 500, and has a flat (planar) shape. The front surface 411 of the flange portion 410 has a larger area than the rear surface 421 of the protrusion 420. The front surface 411 of the flange portion 410 may be the second electrode terminal of the button cell 1000.

The protrusion 420 protrudes from the flange portion 410 to extend through the through hole 210. The protrusion 420 is connected to the second electrode 120 through the through hole 210. The protrusion 420 does not contact the bonding layer 500, and the rear surface 421 of the protrusion 420 is coupled to the second electrode tab 150. The rear surface 421 of the protrusion 420 may be welded to the second electrode tab 150, but the present disclosure is not limited thereto, and the rear surface 421 may be in contact with the second electrode tab 150 but not welded thereto. The rear surface 421 of the protrusion 420 has a flat shape and has a smaller area than the front surface 411 of the flange portion 410. Because the protrusion 420 is coupled to the second electrode tab 150, the protrusion 420 and the flange portion 410 of the terminal plate 400 have same polarity as that of the second electrode 120. In one or more embodiments, the protrusion 420 and the flange portion 410 are integrally formed using a forging process, but the present disclosure is not limited thereto, and different materials may be combined to form the terminal plate 400.

A plating layer may be coated on the outer surface of the terminal plate 400, but the present disclosure is not limited thereto, and various known coating layers may be coated on the outer surface of the terminal plate 400. In one or more embodiments, the terminal plate 400 includes aluminum, but the present disclosure is not limited thereto, and the terminal plate 400 may include various known metals.

The bonding layer 500 is located between the portion 202 of the case 200 and the flange portion 410 of the terminal plate 400. The bonding layer 500 insulates the case 200 from the terminal plate 400 and bonds the case 200 to the terminal plate 400.

The bonding layer 500 protrudes (e.g., extends radially outward) from the terminal plate 400 toward the sidewall 201 of the case 200. The bonding layer 500 protrudes in the horizontal direction HD from between the case 200 and the terminal plate 400 and is exposed on the portion 202 of the case 200 and overlaps at least a portion of the sidewall 201. The bonding layer 500 protrudes from the terminal plate 400 in the horizontal direction HD, which is the direction to the sidewall 201 of the case 200, to overlap the sidewall 201 of the case 200 and the first stepped portion 230 of the sidewall 201 of the case 200 in the vertical direction VD. In one or more embodiments, the bonding layer 500 is located only on a front surface of the portion 202 of the case 200, and is not located on a rear surface of the portion 202 of the case 200. In one or more embodiments, the bonding layer 500 contacts the flange portion 410 of the terminal plate 400, and does not contact the protrusion 420 of the terminal plate 400. Since the bonding layer 500 protrudes from the terminal plate 400 toward the sidewall 201 of the case 200 and overlaps the sidewall 201 and the first stepped portion 230, a short circuit between the case 200 and the terminal plate 400 having different polarities is prevented.

The bonding layer 500 includes an insulating material and insulates between the case 200 and the terminal plate 400. The bonding layer 500 is thermally fused between the portion 202 of the case 200 and the flange portion 410 of the terminal plate 400 using heat or a laser beam, or the like. The bonding layer 500 includes, but is not limited to, polypropylene, polyimide, etc., and may include various known resins for insulative bonding between the case 200 and the terminal plate 400. The bonding layer 500 bonds the case 200 and the terminal plate 400. Accordingly, the through hole 210 of the case 200 is sealed by the terminal plate 400 and the bonding layer 500. The opening 220 of the case 200 is welded to the bottom plate 300 by the welded portion 600. Thus, the electrode assembly 100 is accommodated in the case 200 and is completely sealed by the terminal plate 400 and the bonding layer 500 at the upper end and completely sealed by the bottom plate 300 at the lower end.

For example, the bonding layer 500 may include a thermosetting resin and a thermoplastic resin. The thermosetting resin and the thermoplastic resin of the bonding layer 500 may be stacked to include a plurality of layers, but the present disclosure is not limited thereto. The thermosetting resin of the bonding layer 500 is cured by heat, and may include various known thermosetting resins such as a phenol resin, a urea resin, a melamine resin, an epoxy resin, and/or a polyester resin. In one or more embodiments, the thermoplastic resin of the bonding layer 500 includes, but is not limited to, a polypropylene resin that melts at a predetermined temperature, and may include various known thermoplastic resins such as polystyrene, polyethylene, and/or a polyvinyl chloride resin.

The welded portion 600 welds and couples the case 200 and the bottom plate 300. The welded portion 600 is located in the first stepped portion 230 of the sidewall 201 between the sidewall 201 of the case 200 and the bottom plate 300 and welds between the first stepped portion 230 of the sidewall 201 of the case 200 and the bottom plate 300 that is inserted (accommodated) into the first stepped portion 230. The welded portion 600 is formed between the first stepped portion 230 of the sidewall 201 of the case 200 and the bottom plate 300 by using a welding means such as a laser beam irradiated in the vertical direction VD. The welded portion 600 has a circular annular shape corresponding to the planar shapes of the first stepped portion 230 of the sidewall 201 of the case 200 and the edge of the bottom plate 300, but the present disclosure is not limited thereto, and the welded portion 600 may have various ring shapes such as a polygonal shape, an elliptical shape, and a closed loop shape, corresponding to the planar shapes of the first stepped portion 230 of the sidewall 201 of the case 200 and the edge (e.g., outer circumferential edge) of the bottom plate 300.

The welded portion 600 is formed by a welding process in which a welding means (mechanism) such as a laser beam is irradiated in a vertical direction VD between the sidewall 201 of the case 200 and the bottom plate 300. Even if the bonding layer 500 overlaps the sidewall 201 of the case 200 and the first stepped portion 230 in the vertical direction VD, an interference due to the welded portion 600 is not generated in the bonding layer 500 and an interference with respect to the welded portion 600 is not generated by the bonding layer 500 when the welded portion 600 is formed. That is, welding between the case 200 and the bottom plate 300 is easily performed by the welded portion 600 and interference by the welded portion 600 is avoided.

As such, according to a button cell 1000 according to an embodiment, the welded portion 600 welding between the case 200 and the bottom plate 300 is located in a lower portion of the button cell 1000, and the bonding layer 500 located in an upper portion of the button cell 1000 that protrudes from the terminal plate 400 toward the sidewall 201 of the case 200 direction to overlap the sidewall 201. Therefore, the interference of the welded portion 600 with respect to the bonding layer 500 and the terminal plate 400 located in the upper portion of the button cell 1000 is avoided such that a short circuit between the case 200 and the terminal plate 400 is prevented.

That is, the button cell 1000 has the advantage of preventing a short circuit between the case 200 and the terminal plate 400 by avoiding or preventing the interference of the welded portion 600 with respect to the terminal plate 400 and the bonding layer 500.

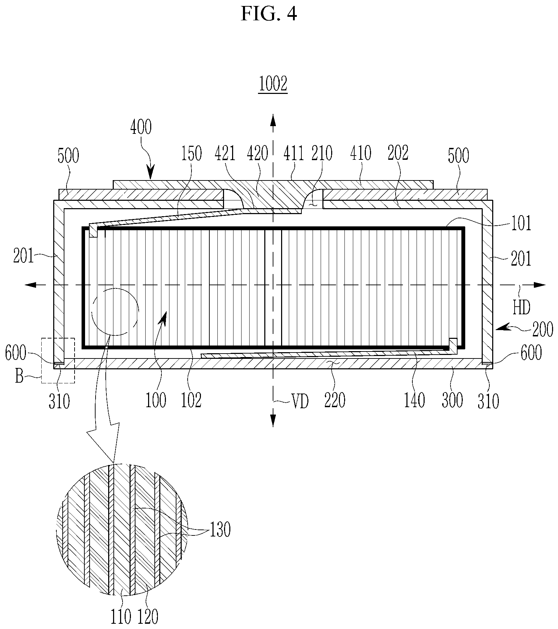

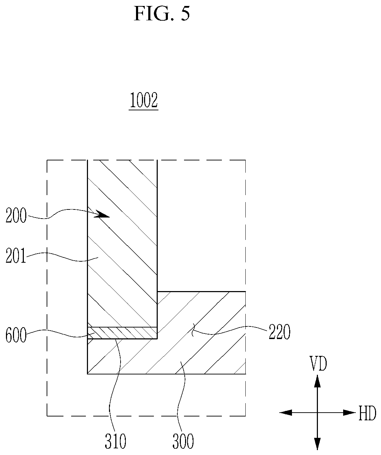

Hereinafter, a button cell according to another embodiment will be described with reference to FIG. 4 and FIG. 5.

Hereinafter, a button cell according to another embodiment will be described with regard to differences from the button cell according to the above-described embodiment.

FIG. 4 is a cross-sectional view showing a button cell according to another embodiment. FIG. 5 is an enlarged view of a region B of FIG. 4.

Referring to FIG. 4 and FIG. 5, a button cell 1002 according to another embodiment includes the electrode assembly 100, the case 200, the bottom plate 300, the terminal plate 400, the bonding layer 500, and the welded portion 600.

The bottom plate 300 includes a second stepped portion 310 recessed to correspond to the sidewall 201 of the case 200. The sidewall 201 of the case 200 is inserted into the second stepped portion 310 of the bottom plate 300.

The second stepped portion 310 is recessed along the sidewall 201 of the case 200 in the vertical direction VD in a planar annular shape, but the present disclosure is not limited thereto. As the sidewall 201 of the case 200 is inserted into the second stepped portion 310 of the bottom plate 300, the bottom plate 300 completely covers (underlaps) the sidewall 201 of the case 200 in the vertical direction VD, and at the same time, prevents movement of the sidewall 201 of the case 200 in the horizontal direction HD. Since the sidewall 201 of the case 200 is inserted into the second stepped portion 310 of the bottom plate 300 such that the bottom plate 300 completely covers (underlaps) the sidewall 201 of the case 200 in the vertical direction VD, the sidewall 201 of the case 200 does not protrude beyond the bottom plate 300 in the horizontal direction HD, which is an elongation direction of the bottom plate 300. Accordingly, the sidewall 201 of the case 200 is prevented from being interfered with by another external element.

In a state where the sidewall 201 of the case 200 is inserted into the second stepped portion 310 of the bottom plate 300, the bottom plate 300 is directly coupled to the sidewall 201 of the case 200 by the welded portion 600 formed by a welding process using welding means such as laser beam radiated in the horizontal direction HD. The bottom plate 300 and the sidewall 201 of the case 200 are directly coupled by the welded portion 600 located in the second stepped portion 310, and therefore, the opening 220 of the case 200 is covered (e.g., sealed) by the bottom plate 300.

The welded portion 600 welds and couples the case 200 and the bottom plate 300. The welded portion 600 is located in the second stepped portion 310 of the bottom plate 300 between the sidewall 201 of the case 200 and the bottom plate 300. The welded portion 600 welds between the second stepped portion 310 of the bottom plate 300 and the sidewall 201 of the case 200 that is inserted into the second stepped portion 310. The welded portion 600 is formed between the second step portion 310 of the bottom plate 300 and the sidewall 201 of the case 200 by using a welding means (mechanism) such as a laser beam irradiated in the horizontal direction HD. The welded portion 600 has a circular annular shape corresponding to the planar shapes of the sidewall 201 of the case 200 and the second stepped portion 310 of the bottom plate 300, but the present disclosure is not limited thereto, and the welded portion 600 may have various ring shapes such as a polygonal shape, an elliptical shape, and a closed loop shape, corresponding to the planar shapes of the sidewall 201 of the case 200 and the second stepped portion 310 of the bottom plate 300.

The welded portion 600 is formed by a welding process in which a welding means (mechanism) such as a laser beam is irradiated in the horizontal direction HD between the sidewall 201 of the case 200 and the bottom plate 300. Even if the bonding layer 500 overlaps the sidewall 201 of the case 200 and the second stepped portion 310 in the vertical direction VD, an interference due to the welded portion 600 is not generated in the bonding layer 500 and an interference with respect to the welded portion 600 is not generated by the bonding layer 500 when the welded portion 600 is formed. That is, welding between the case 200 and the bottom plate 300 is easily performed by the welded portion 600 and interference by the welded portion 600 is avoided.

As such, according to a button cell 1002 according to another embodiment, the welded portion 600 welding between the case 200 and the bottom plate 300 is located in a lower portion of a button cell 1002, and the bonding layer 500 located in an upper portion of the button cell 1002 protrudes from the terminal plate 400 toward the sidewall 201 of the case 200 direction to overlap the sidewall 201. Therefore, the interference of the welded portion 600 with respect to the bonding layer 500 and the terminal plate 400 located in the upper portion of the button cell 1002 is avoided or prevented such that a short circuit between the case 200 and the terminal plate 400 is prevented.

That is, the button cell 1002 has the advantage of preventing a short circuit between the case 200 and the terminal plate 400 by avoiding or preventing the interference of the welded portion 600 with respect to the terminal plate 400 and the bonding layer 500.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### Description of symbols

100: electrode assembly
200: case
300: bottom plate
400: terminal plate
500: bonding layer
600: welded portion

## Claims

1. A button cell (1000, 1002), comprising:
an electrode assembly (100) comprising a first electrode (110), a second electrode (120), a separator (130) between the first electrode (110) and the second electrode (120), a first electrode tab (140) extending from the first electrode (110), and a second electrode tab (150) extending from the second electrode (120);
a case (200) accommodating the electrode assembly (100), the case (200) comprising a through hole (210) exposing an upper central region of the electrode assembly (100) and an opening (220) exposing a lower portion (102) of the electrode assembly (100);
a bottom plate (300) coupled to the case (200) to cover the opening (220), and connected to the first electrode tab (140);
a terminal plate (400) insulated from and bonded to the case (200) to cover the through hole (210), and connected to the second electrode tab (150); and
a bonding layer (500) between the case (200) and the terminal plate (400), the bonding layer (500) being configured to insulate and bond the case (200) and the terminal plate (400).

2. The button cell (1000, 1002) of claim 1, further comprising a welded portion (600) welding the case (200) to the bottom plate (300).

3. The button cell (1000, 1002) of claim 2, wherein:
the case (200) further comprises a sidewall (201); and
the welded portion (600) is located between the sidewall (201) and the bottom plate (300).

4. The button cell (1000, 1002) of claim 3, wherein the sidewall (201) comprises a first stepped portion (230) recessed to correspond to the bottom plate (300), the bottom plate (300) being received in the first stepped portion (230).

5. The button cell (1000, 1002) of claim 4, wherein the welded portion (600) is in the first stepped portion (230).

6. The button cell (1000, 1002) of any one of claims 3 to 5, wherein the bottom plate (300) comprises a second stepped portion (310) recessed to correspond to the sidewall (201), the side wall (201) being received in the second stepped portion (310).

7. The button cell (1000, 1002) of claim 6, wherein the welded portion (600) is in the second stepped portion (310).

8. The button cell (1000, 1002) of any one of claims 3 to 7, wherein the bonding layer (500) protrudes from the terminal plate (400) in a direction toward the sidewall (201).

9. The button cell (1000, 1002) of claim 8, wherein the bonding layer (500) overlaps the sidewall (201).

10. The button cell (1000, 1002) of any one of the preceding claims, wherein the terminal plate (400) comprises:
a flange portion (410) covering the through hole (210) and in contact with the bonding layer (500); and
a protrusion (420) extending from the flange portion (410), passing through the through hole (210), and connected to the second electrode tab (150).

11. The button cell (1000, 1002) of claim 10, wherein:
the bonding layer (500) is in contact with the flange portion (410); and
the bonding layer (500) is not in contact with the protrusion (420).

12. The button cell (1000, 1002) of claim 10 or 11, wherein each of a rear surface (421) of the protrusion (420) in contact with the second electrode tab (150) and a front surface (411) of the flange portion (410) not in contact with the bonding layer (500) is flat.

13. The button cell (1000, 1002) of claim 12, wherein an area of the rear surface (421) of the protrusion (420) is smaller than an area of the front surface (411) of the flange portion (410).

14. The button cell (1000, 1002) of any one of the preceding claims, wherein a length of the second electrode tab (150) is shorter than a length of the first electrode tab (140).

15. The button cell (1000, 1002) of any one of the preceding claims, wherein:
the case (200) and the bottom plate (300) have a same polarity as the first electrode (110); and
the terminal plate (400) has a same polarity as the second electrode (120).
